# EUROPEAN PATENT APPLICATION

(11) **EP 3 252 398 A1**
(43) Date of publication of application: **06.12.2017**
(21) Application number: 16171915.8
(22) Date of filing: 30.05.2016
(51) Int. Cl.: F25B 17/00, F25B 17/08, F25B 17/02, F25B 30/04

(54) **HYBRID HEAT PIPE**

(71) Applicant: Climatewell AB (publ), 126 53 Hägersten (SE)
(72) Inventor: BOLIN, Göran, 183 30 Täby (SE)
(74) Representative: Ström & Gulliksson AB

(57) **Abstract**

There is disclosed a heat transferring device comprising a number of spaces and conduits together with heat transferring elements and a heat exchanger as well as a heat source. The invention is highly suitable for all applications where heat is to be transferred from a small volume to a large area. It is also suitable where the same large area needs to be cooled. It is possible to achieve even temperature distribution on a large surface when the heat source a small. The energy consumption is reduced compared to more traditional technologies. The number of moving parts is minimized which gives lower costs for use, manufacture, maintenance etc. The invention is very versatile and can be utilized in many different applications where it is desired to transfer heat from one point to a large area. It can also be used for cooling purposes.

## Description

### Technical field

The present invention relates generally to a heat distribution and cooling device with an integrated chemical heat pump.

### Background

Heat sorption pumps are used in various heating systems today and will increase primarily due to cost reasons because of its ability to reduce energy consumption. Additionally, but not least this will have a positive environmental impact since reduction of energy consumption most often means reduced CO₂ emissions.

In order for sorption heat-pumps to be profitable, they need to be simple, robust, highly efficient, affordable and easy to integrate with energy storage. In addition, such sorption heat pumps must also be easily integrated into the relevant heating and cooling appliances already on the market today.

In PCT/SE2008/000676 there is disclosed a combination of a sorption heat pump with integrated energy storage. For such a sorption heat pump or any other sorption heat-pump to operate energy- and cost-effectively in an appliance and/or in a cooling or heating system, it requires a device consisting of a multitude of valves, heat exchangers, hydraulic piping, pumps and a controller.

Chemical heat pumps are also disclosed in US 09/868,326, US 12/812,090, US 12/302,868, US 13/319,485, US 13/319,496, and US 13/319,502.

To meet the need these pumps have to be reliable and solid with few moving parts.

Many sorption machines work according to a batch process which means that they work intermittently. These sorption machines usually consist of two main components: a reactor and a part that acts as a condenser or evaporator depending on the phase of the process. In these types of machines there are two well defined phases: charging and discharging. During the charging phase, the reactor takes in heat at high temperature and the condenser releases heat at lower temperatures. During the discharging phase, the reactor releases heat at low relatively temperatures and the evaporator absorbs heat at much lower temperatures (i.e. cooling).

The two phases are strongly based on heat exchange with the environment. Additionally, since the absorption machine works intermittently, the reactor needs heat in one phase and in the following phase it releases heat. The same occurs with the condenser/evaporator but conversely.

In order to supply or release heat at different temperatures, the sorption machine often uses a complex system of valves, pumps and pipes that act as an auxiliary system for the sorption machine. Thus, the sorption machine becomes more complex by having moving parts resulting in higher electricity consumption and a greater risk of leakage in addition to higher costs and a more complicated manufacturing process.

Thus there is a need to provide machines with fewer moving parts.

Further there is a need for machines that are able to distribute heat from a heat source which is small to a large area where the temperature distribution is even, and which also have the capability of cooling the same large area in a subsequent cooling phase.

### Summary

It is an object of the present invention to obviate at least some of the disadvantages in the prior art and to provide an improved heat transferring device with an integrated chemical heat pump which also has the ability of cooling.

In a first aspect there is provided a heat transferring device comprising:
a first space 22 in thermal contact with a heat source,
a second space 34 in fluid contact with a third space 33 over at least one heat transferring member 13
a heat exchanger 26,
a reservoir 30,
a pump 28,
at least one second conduit 2 leading from the reservoir 30 to the pump 28 and further to the heat exchanger 26,
at least one active substance 27 in thermal contact with the outer surface of the at least one heat transferring member 13, the heat transferring member 13 being inside a fourth space 31
a volatile liquid inside the fourth space 31 wherein the volatile liquid is adapted to be absorbed by the active substance 27 at a first temperature and be desorbed by the active substance 27 at a second higher temperature,
at least one third conduit 3 leading from the third space 33 to the reservoir 30,
at least one fourth conduit 4 leading from the heat exchanger 26 to the second space 34,
at least one fifth conduit 5 leading from the reservoir 30 to the first space 22.

Further aspects and embodiments are defined in the appended claims.

The invention is highly suitable for all applications where heat is to be transferred from a small volume to a large area. It is also suitable where the same large area needs to be cooled.

One advantage is that it is possible to achieve very even and equal temperature on a large surface for both heating and cooling.

The energy consumption is reduced compared to more traditional technologies.

Another advantage is that the number of moving parts is minimized which gives lower costs for use, manufacture, maintenance etc.

Yet another advantage is that the invention is very versatile and can be utilized in many different applications where it is desired to transfer heat from one point to a large area. It can also be used for cooling purposes. The large area is represented by the heat exchanger 26.

The invention is suitably used for heating and cooling of offices, residential buildings, industries, private homes and so on. For instance heating during the night can be followed by cooling during the day. In industry cooling followed by heating or vice versa can benefit from this technology in various industrial processes.

Further the invention can be applied to a large variety of areas, including but not limited to water heaters, domestic water heaters, furnaces, gas driven heat pumps, vehicle heating and/or cooling including cars, trucks, on road and off road, heating and/or cooling of ships as well as combined heating and cooling power production.

### Brief description of the drawings

The invention is described, by way of example, with reference to the accompanying drawings, in which:

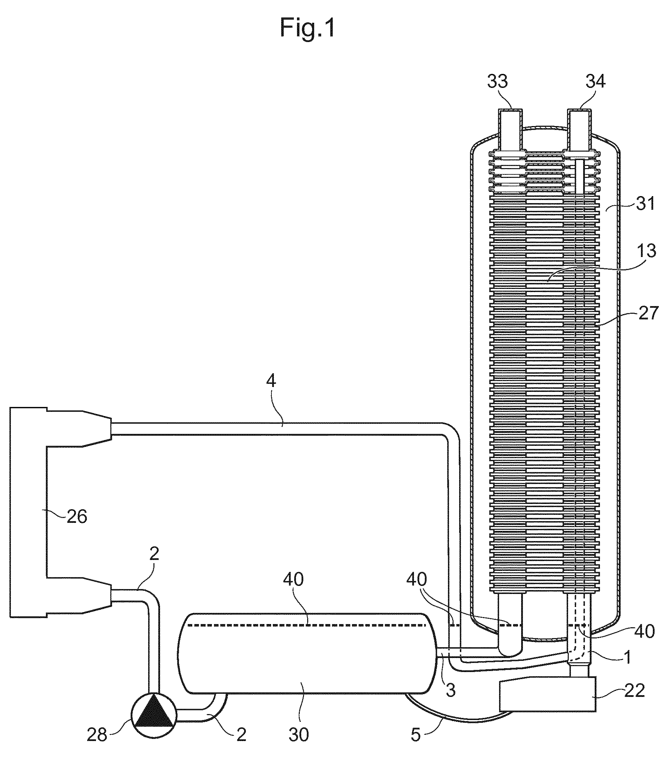

Fig. 1 shows an embodiment of a heat transferring device according to the invention during idle mode, wherein the level of heat transferring medium is indicated with a dashed line 40.
Fig. 2 shows the same embodiment during heating/charging mode with the level of heat transferring medium is indicated with a dashed line 40.
Fig. 3 shows the same embodiment during cooling/discharging mode with the level of heat transferring medium is indicated with a dashed line 40.

### Detailed description

Before the invention is disclosed and described in detail, it is to be understood that this invention is not limited to particular compounds, configurations, method steps, substrates, and materials disclosed herein as such compounds, configurations, method steps, substrates, and materials may vary somewhat. It is also to be understood that the terminology employed herein is used for the purpose of describing particular embodiments only and is not intended to be limiting since the scope of the present invention is limited only by the appended claims and equivalents thereof.

It must be noted that, as used in this specification and the appended claims, the singular forms "a", "an" and "the" include plural referents unless the context clearly dictates otherwise.

If nothing else is defined, any terms and scientific terminology used herein are intended to have the meanings commonly understood by those of skill in the art to which this invention pertains.

Unless nothing else is clearly indicated the term lower refers to the direction in relation to the gravitational force when the device is placed in a position intended for operation.

In a first aspect there is provided a heat transferring device comprising:
a first space 22 in thermal contact with a heat source,
a second space 34 in fluid contact with a third space 33 over at least one heat transferring member 13
a heat exchanger 26,
a reservoir 30,
a pump 28,
at least one second conduit 2 leading from the reservoir 30 to the pump 28 and further to the heat exchanger 26,
at least one active substance 27 in thermal contact with the outer surface of the at least one heat transferring member 13, the heat transferring member 13 being inside a fourth space 31
a volatile liquid inside the fourth space 31 wherein the volatile liquid is adapted to be absorbed by the active substance 27 at a first temperature and be desorbed by the active substance 27 at a second higher temperature,
at least one third conduit 3 leading from the third space 33 to the reservoir 30,
at least one fourth conduit 4 leading from the heat exchanger 26 to the second space 34,
at least one fifth conduit 5 leading from the reservoir 30 to the first space 22.

In one embodiment the heat source 22 is at least one selected from the group consisting of a gas burner, an electrical heater, an oil burner, a wood burner, a coal burner, a nuclear powered heat source, a solar powered heat source, a wave powered heat source, and a wind powered heat source. Any heat source that can provide heat as long as the heat source is able to provide enough heat to evaporate the heat transferring medium.

In one embodiment the at least one heat transferring member 13 is shaped as a plate. The heat transferring members 13 between the spaces 34 and 33 provides a fluid contact between the spaces. In order to transfer heat to and from the active substance on the outside of the heat transferring members they are suitably made with a large surface area and thin so that heat can efficiently be transferred between the heat transferring medium inside and the active substance on the outside.

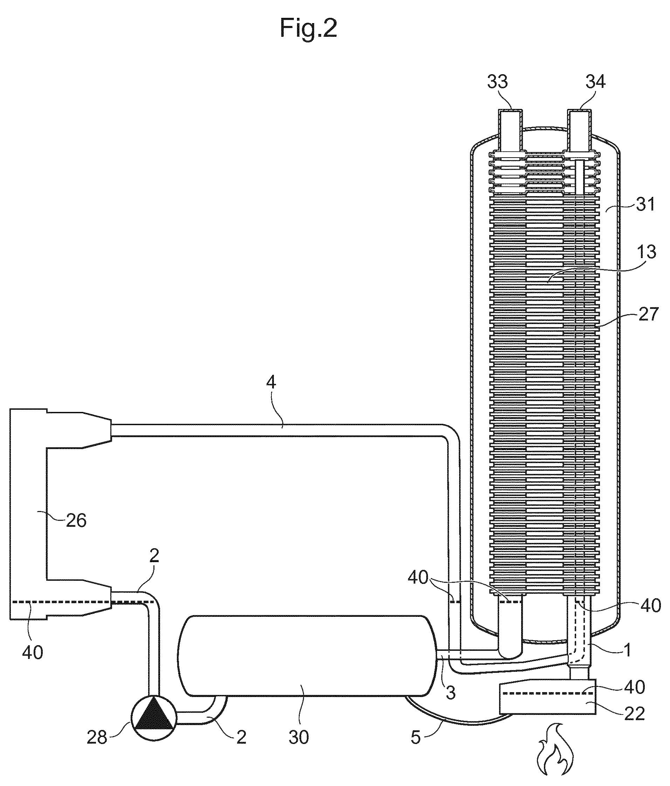

In one embodiment the fifth conduit is a capillary tube. In an alternative embodiment the fifth conduit is a tube with a valve that makes it possible to adjust the flow rate to a suitable value. The flow through the fifth conduit should correspond at least roughly to the evaporation rate during heating by the heat source. During heating mode the heat transferring medium flows from the tank 30 through the fifth conduit 5 into the first space 22 where it is evaporated by heat from the heat source. In one embodiment the flow rate through the fifth conduit 5 equals the evaporation rate from the first space 22. This is indicated in Fig 2 with a lower level of heat transferring medium 40 in the first space 22 during a steady state of heating.

In one embodiment the third conduit comprises at least one valve. This allows the flow rate to be adjusted. In an alternative embodiment the capacity of the pump 28 is instead adapted to a suitable flow rate. It is preferred that the pump 28 runs at its optimum rate and that the flow is unrestricted. Then the flow rate is adapted by selecting a suitable pump with the desired capacity. This will minimize the energy consumption.

In one embodiment the fourth conduit 4 ends in the uppermost third of the second space 34. In an alternative embodiment the fourth conduit 4 ends in the uppermost fourth part of the second space 34. It is conceived that the space 34 is divided into three or four parts of equal volume. In one embodiment the fourth conduit 4 ends in the top of the second space 34. The fourth conduit advantageously ends towards the upper part of the space 34 so that the fluid inside the system (i.e. space 34) does not take an undesired shortcut.

In one embodiment the fourth space 31 is in fluid connection with a condenser/evaporator through a first conduit. The fourth space 31 together with the condenser/evaporator and the connection between then serves as a chemical heat pump. In one embodiment the first conduit has a valve so that it is possible to keep the volatile liquid from reaching the active substance after a charging phase. When discharging is desired, the valve is opened. The condenser/evaporator then forms a part of the chemical heat pump. If cooling is desired the condenser/evaporator can be utilized for cooling during the discharging phase. Thus a system distributing a cooling medium in thermal contact with the condenser/evaporator is envisaged.

The active substance is not necessarily a salt. The active substance can be any material, compound and/or entity capable of absorbing a volatile liquid at a first temperature and desorbing the volatile liquid at a second higher temperature.

In one embodiment the active substance is at least one selected from the group consisting of CaO, CaOH, LiCl, LiBr, Lil, MgCl₂, MgBr₂, Mgl₂, CaCl₂, CaBr₂, Cal₂, Srl₂, KOH, NaOH, ZnCl₂, ZnBr₂, Znl₂, AlCl₃, AlBr₃ and All₃. In an alternative embodiment the active substance is at least one selected from the group consisting of CaOH, LiCl, LiBr, Lil, MgCl₂, MgBr₂, Mgl₂, CaCl₂, CaBr₂, Cal₂, Srl₂, KOH, NaOH, ZnCl₂, ZnBr₂, Znl₂, AlCl₃, AlBr₃ and All₃.

In one embodiment the volatile liquid is at least one selected from the group consisting of water, and ammonia.

In one embodiment the heat transferring medium is at least one selected from water, a C1-C7 alcohol, and ammonia. The skilled person realizes that any suitable heat transferring medium can be utilized.

The active substance on the outside of the heat transferring elements 13 are parts of a chemical heat pump together with a volatile liquid. The active substance can be a salt and the volatile liquid can be water. The chemical heat pump works batch-wise in two phases. That means it has a charging phase and a discharging phase.

Now the operation and function of the device is described in greater detail. The first phase of absorption cycle is the desorption i.e. the charging. This is depicted in fig 2. The reactor with its active substance 27 is charged by being in thermal contact with heat transferring bodies 13 holding high temperature. The heat source 22 provides heat evaporating the heat transferring medium so that it reaches the space 34 in gas phase. The gas reaches the heat transferring members 13 where heat is transferred to the active substance on the outside. The gas and/or condensed heat transferring medium continues to the space 33 and further down to the reservoir 30 as a liquid. From the reservoir 30 the heat transferring medium reaches the space in thermal contact with the heat source 22 through the fifth conduit 5. The fifth conduit 5 is adapted so that a suitable flow of heat transferring medium is taking place for a certain heating power.

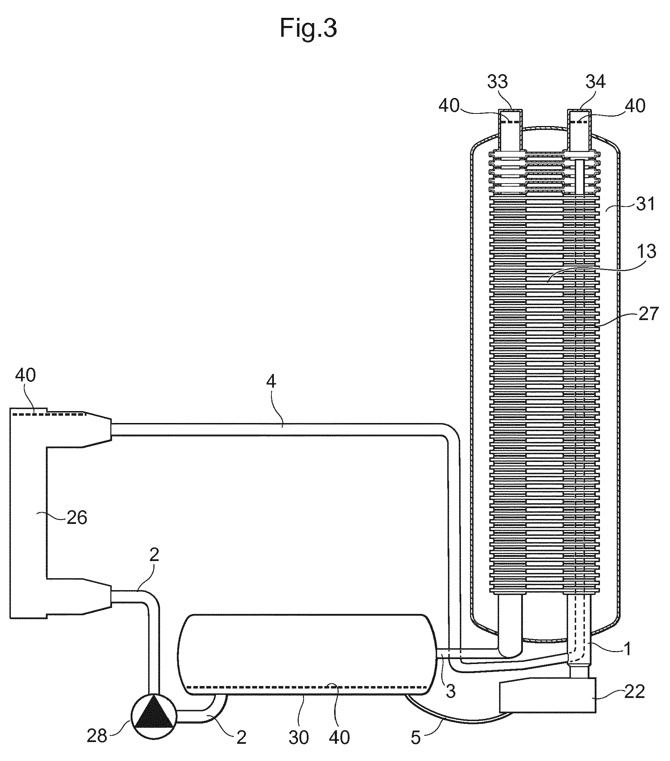

The discharging phase is depicted in fig 3. The pump 28 pumps the heat transferring medium from the reservoir 30 up to the heat exchanger 26 and further via the fourth conduit 4 into the space 34 whereby it flows through the heat transferring members 13 and is heated because the volatile liquid is absorbed by the active substance on the outside of the heat transferring members 13. The heat is transferred from the active substance on the outside to the medium in the inside. The heated heat transfer medium flows back to the reservoir and circulates in the system.

It is conceived that the heat exchanger 26 can be placed anywhere in the loop of circulating heat transferring medium which is created when the pump 28 is on. The same applies for the pump 28 and the tank 30. Thus the relative position of the tank 30, pump 28 and heat exchanger 26 could be varied.

The operation principle of the chemical heat pump part of the device is described in greater detail: The first phase of the heat pump is the charge phase. It involves drying the active substance, i.e. desorption. In this phase, volatile liquid desorbs as a gas, from the active substance on the surface of the heat transferring elements 13, and is then subsequently condensed in the combined condenser/evaporator which it reaches through the first conduit. The condensation that now takes place in the condenser/evaporator can be used as useful energy for heating purposes. In the discharging phase the volatile liquid is allowed to reach the dried active substance so that heat is released. A valve between the condenser/evaporator and the fourth space 31 can be used to control when the volatile liquid can flow back to the active substance on the heat transferring elements 13 from the condenser/evaporator.

The volatile liquid is adapted to be absorbed by the active substance at a first temperature and the volatile liquid is adapted to be desorbed by the active substance at a second higher temperature, whereby the active substance at the first temperature has a solid phase, from which the active substance during uptake of the volatile liquid and its gas phase immediately transforms partially into liquid phase and/or a solution and whereby the active substance at the second higher temperature has a liquid phase and/or a solution phase, from which the active substance during desorption of the volatile liquid, in particular the gas phase of the volatile liquid, in particular the gas phase of the volatile liquid, immediately transforms partially into solid phase.

In one embodiment the heat source 22 is a gas burner. Other heat sources are also encompassed. In one embodiment the heat source is an electric heater. In another embodiment the heat source is fuelled with oil. In yet another embodiment the heat source is burning wood and/or coal. In an alternative embodiment the heat source is a combination of different sources such as a combination of at least two selected from the group consisting of gas, oil, electricity, wood, coal and other organic materials. A heat source that is an organic material means that it burns that organic material using oxygen from the surrounding air. Another alternative is solar powered heating. Further waste heat from an engine, an industrial process or another sources can also be utilized.

In one embodiment the at least one heat transferring member 13 is shaped as a disc. Alternative shapes are also encompassed. An advantage of a flat and/or disc shaped body 13 is that it is easy to cover with a matrix, which in turn is able to hold the active substance 27, i.e. the active substance in the chemical heat pump. A flat body gives a large surface to cover with matrix and active substance 27.

In one embodiment the active substance 27 is at least one selected from the group consisting of LiCl, LiBr, Lil, MgCl₂, MgBr₂, Mgl₂, CaCl₂, CaBr₂, Cal₂, Srl₂, KOH, NaOH, ZnCl₂, ZnBr₂, Znl₂, AlCl₃, AlBr₃ and All₃. In an alternative embodiment the active substance 27 is at least one selected from the group consisting of MgCl₂, MgBr₂, LiCl, CaCl₂, CaBr₂, ZnCl₂ and NaOH.

In one embodiment the heat transferring element(s) 13 are covered with a matrix. In one embodiment the heat transferring element(s) 13 are covered with a matrix adapted to holding the active substance both in solid state and in solution with the volatile liquid. The matrix is adapted to holding the active substance in all states using for instance capillary force. The function of the matrix is to maintain the solution of the active substance at the location thereof and thereby increase the heat conduction between the heat transferring body 13 and the active substance when the active substance is changing from its liquid (i.e. solution in volatile liquid) to its solid state in the charging process and from its solid to its liquid state during the discharging process. Thereby the fact that the solution often has a higher heat conducting capability than the solid substance can be exploited. The matrix is formed from a substance that is inert to the process in the heat pump and may generally have an ability of binding the solution phase of the active substance to itself and at same time allow the active substance to interact with the volatile medium.

In one embodiment the heat transferring element(s) 13 are in thermal contact with particles comprising an inner part and an outer coating, said inner part comprises at least one selected from the group consisting of a salt and CaO and said outer coating comprises hydrophobic nanoparticles, wherein the particle has an average size from 1 to 1000 µm.

In one embodiment the volatile liquid comprises water. In one embodiment the volatile liquid is water.

In one embodiment the heat transferring medium comprises water. In one embodiment the heat transferring medium is water. In one embodiment the heat transferring medium consists of water.

In one embodiment a further reservoir 29 is arranged between the evaporator 26 and the pump 28. An advantage of using the additional reservoir 29 is that liquid can be pumped into the reservoir 29 and subsequently slowly flow into the space 34.

Other features and uses of the invention and their associated advantages will be evident to a person skilled in the art upon reading the description and the examples.

It is to be understood that this invention is not limited to the particular embodiments shown here. The embodiments are provided for illustrative purposes and are not intended to limit the scope of the invention since the scope of the present invention is limited only by the appended claims and equivalents thereof.

## Claims

1. A heat transferring device comprising:
a first space (22) in thermal contact with a heat source,
a second space (34) in fluid contact with a third space (33) over at least one heat transferring member (13)
a heat exchanger (26),
a reservoir (30),
a pump (28),
at least one second conduit (2) leading from the reservoir (30) to the pump (28) and further to the heat exchanger (26),
at least one active substance (27) in thermal contact with the outer surface of the at least one heat transferring member (13), the heat transferring member (13) being inside a fourth space (31)
a volatile liquid inside the fourth space (31) wherein the volatile liquid is adapted to be absorbed by the active substance (27) at a first temperature and be desorbed by the active substance (27) at a second higher temperature,
at least one third conduit (3) leading from the third space (33) to the reservoir (30),
at least one fourth conduit (4) leading from the heat exchanger (26) to the second space (34),
at least one fifth conduit (5) leading from the reservoir (30) to the first space (22),
a heat transferring medium residing in at least one of the first space, the second space, the third space, the second conduit, the third conduit, the fourth conduit, and the fifth conduit.

2. The heat transferring device according to claim 1, wherein the heat source (22) is at least one selected from the group consisting of a gas burner, an electrical heater, an oil burner, a wood burner, a coal burner, a nuclear powered heat source, a solar powered heat source, a wave powered heat source, and a wind powered heat source.

3. The heat transferring device according to any one of claims 1-2, wherein the at least one heat transferring member (13) is shaped as a plate.

4. The heat transferring device according to any one of claims 1-3, wherein the fifth conduit is a capillary tube.

5. The heat transferring device according to any one of claims 1-4, wherein the third conduit comprises at least one valve.

6. The heat transferring device according to any one of claims 1-5, wherein the fourth conduit (4) ends in the uppermost third of the second space (34).

7. The heat transferring device according to any one of claims 1-6, wherein the fourth space (31) is in fluid connection with a condenser/evaporator through a first conduit.

8. The heat transferring device according to any one of claims 1-7, wherein the active substance (27) is at least one selected from the group consisting of CaO, CaOH, LiCl, LiBr, Lil, MgCl₂, MgBr₂, Mgl₂, CaCl₂, CaBr₂, Cal₂, Srl₂, KOH, NaOH, ZnCl₂, ZnBr₂, Znl₂, AlCl₃, AlBr₃ and All₃.

9. The heat transferring device according to any one of claims 1-8, wherein the volatile liquid is at least one selected from the group consisting of water, and ammonia.

10. The heat transferring device according to any one of claim 1-9, wherein the heat transferring medium is at least one selected from water, a C1-C7 alcohol, and ammonia.

11. The heat transferring device according to any one of claim 1-10, wherein the heat transferring element(s) (13) are covered with a matrix adapted to holding the active substance both in solid state and in solution with the volatile liquid.

12. The heat transferring device according to any one of claim 1-11, wherein the heat transferring element(s) (13) are in thermal contact with particles comprising an inner part and an outer coating, said inner part comprises at least one selected from the group consisting of a salt and CaO and said outer coating comprises hydrophobic nanoparticles, wherein the particle has an average size from 1 to 1000 µm.
